# EUROPEAN PATENT SPECIFICATION

(11) **EP 4 507 215 B1**
(45) Date of publication and mention of the grant of the patent: **06.05.2026**
(21) Application number: 23802676.9
(22) Date of filing: 27.04.2023
(51) Int. Cl.: H04B 7/185, H04W 24/02, H04W 48/18, H04W 76/10, H04W 76/11, H04L 41/0893

(54) **COMMUNICATION METHOD AND APPARATUS, RELATED DEVICE, AND STORAGE MEDIUM**
KOMMUNIKATIONSVERFAHREN UND -VORRICHTUNG, ZUGEHÖRIGE VORRICHTUNG UND SPEICHERMEDIUM
PROCÉDÉ ET APPAREIL DE COMMUNICATION, DISPOSITIF ASSOCIÉ, ET SUPPORT DE STOCKAGE

(30) Priority: 09.05.2022 CN 202210502155
(43) Date of publication of application: 12.02.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Yushuang, Beijing 100032 (CN); SHI, Nanxiang, Beijing 100032 (CN); DENG, Pingke, Beijing 100032 (CN); ZHENG, Shaowen, Beijing 100032 (CN)
(74) Representative: GPI Brevets
(86) International application number: PCT/CN2023/091204
(87) International publication number: WO 2023/216904

(56) References cited:
- WO-A1-2022/006828
- CN-A- 111 586 771
- CN-A- 113 163 457
- CN-A- 113 179 118
- CN-A- 114 025 367
- US-A1- 2020 137 552
- DRIF YOUSSOUF ET AL: "Slice Aware Non Terrestrial Networks", 2021 IEEE 46TH CONFERENCE ON LOCAL COMPUTER NETWORKS (LCN), IEEE, 4 October 2021 (2021-10-04), pages 24 - 31, XP033993192, DOI: 10.1109/LCN52139.2021.9524938
- LENOVO ET AL: "Way forward and TP for RAN Slicing solution", vol. RAN WG2, no. Electronic Meeting; 20220201, 14 February 2022 (2022-02-14), XP052111007, Retrieved from the Internet <URL:https://ftp.3gpp.org/tsg_ran/WG2_RL2/TSGR2_117-e/Docs/R2-2203183.zip R2-2203183 Way forward and TP for RAN Slicing solution.docx> [retrieved on 20220214]
- THALES, TNO, CNES, AVANTI, CCTC, ESA, FRAUNHOFER IIS, HUGHES NETWORK SYSTEMS, NOMOR RESEARCH, CATAPULT, IAESI, SES, ICS, VTT, ALIB: "New Study on Architecture aspects of using satellite access in 5G", 3GPP TSG-SA WG2 MEETING #127, S2-184502, 20 April 2018 (2018-04-20), XP051433058
- SES, AVANTI COMMUNICATIONS LTD, VT IDIRECT SOLUTIONS LTD, HUGHES NETWORK SYSTEMS, ONEWEB: "Key issue on Network Slicing over satellite backhaul links", SA WG2 MEETING #130, S2-1900322, 15 January 2019 (2019-01-15), XP051590006
- XIAOMI: "PDU session establishment handling in SMF based on satellite information", 3GPP TSG SA WG2 MEETING #145E, S2-2104315, 10 May 2021 (2021-05-10), XP052004626

## Description

### CROSS-REFERENCE TO RELATED APPLICATION

The present disclosure claims the priority of Chinese Application No. 202210502155.X, filed on May 9, 2022.

### TECHNICAL FIELD

The present disclosure relates to the field of communication technologies, and in particular to a communication method and device.

### BACKGROUND

The satellite-ground convergence network has new and complex application scenarios and complex and changeable business characteristics. Implementing network slicing technology based on satellite-ground integration can effectively organize network resources on demand according to various business characteristics, and form differentiated services for different users and different business scenarios. At present, the research on this technology in satellite-ground integration network is still in its infancy. DRIF YOUSSOUF ET AL: "Slice Aware Non Terrestrial Networks", 2021 IEEE 46TH CONFERENCE ON LOCAL COMPUTER NETWORKS (LCN), IEEE, 4 October 2021 (2021-10-04), pages 24-31) relates to a slice aware non terrestrial networks. R2-2203183 discloses a way forward and TP for RAN slicing solution. US2020137552A1 discloses a method for registering terminal in wireless communication system and apparatus therefor.

### SUMMARY

In order to solve the related technical problems, embodiments of the present disclosure provide a communication method and device. The invention is set out in the appended set of claims.

According to the communication method and device, related apparatus and storage medium provided in the embodiment of the present disclosure, the first access network device receives the second session establishment request sent by the terminal, where the second session establishment request is used to request to establish a session for the terminal, and the second session establishment request at least includes the identifier of the first network slice; selects a first satellite core network device based on at least the location information of the terminal and the identifier of the first network slice; and sends a first session establishment request to the first satellite core network device, where the first session establishment request is used to request to establish a session for the terminal. The first session establishment request at least includes the identifier of the first network slice. The first satellite core network device uses the location information of the terminal and ephemeris information to select a satellite serving the first network slice; and uses the selected satellite to establish a session for the terminal. According to the solution provided in the embodiments of the present disclosure, the satellite core network can real-time adjust the strategy of the satellite serving a certain network slicing instance based on ephemeris information and location information of the terminal, so as to select the optimal network connection solution. In this way, the resource isolation, quality assurance and service customization requirements of different application scenarios can be met.

### BRIEF DESCRIPTION OF THE DRAWINGS

FIG. 1 is a schematic flowchart of a communication method according to an embodiment of the present disclosure;
FIG. 2 is a schematic diagram of a network structure according to an embodiment of the present disclosure;
FIG. 3 is a schematic diagram of a satellite that provides slicing services for terminals changing over time according to an embodiment of the present disclosure;
FIG. 4 is a schematic flowchart of another communication method according to an embodiment of the present disclosure;
FIG. 5 is a schematic diagram showing processing flow of network slicing data services according to an application embodiment of the present disclosure;
FIG. 6 is a schematic diagram of a communication device according to an embodiment of the present disclosure;
FIG. 7 is a schematic diagram of another communication device according to an embodiment of the present disclosure;
FIG. 8 is a schematic diagram of a satellite core network device according to an embodiment of the present disclosure;
FIG. 9 is a schematic diagram of a satellite access network device according to an embodiment of the present disclosure; and
FIG. 10 is a schematic diagram of a communication system according to an embodiment of the present disclosure.

### DETAILED DESCRIPTION

The present disclosure will be described in details hereinafter with reference to the accompanying drawings and embodiments.

In related art, main modes used for satellite-ground fusion networks include the following:
Mode 1: satellite transparent transmission, that is, transparent forwarding mode, in which a satellite only plays the role of frequency converter and radio frequency device;
Mode 2: distributed base station, that is, the base station adopts a centralized unit (CU)-distributed unit (DU) separated architecture., and only the DU is deployed on the satellite, which is a regeneration mode;
Mode 3: an entire base station is deployed on a satellite, which is a regeneration mode.

On the other hand, in related art, for mobility management issues, a scenario in which a base station is deployed on a satellite is adopted (i.e., the mode 2, regeneration forwarding mode, also known as regeneration mode). In this mode, the satellite (such as a non-geostationary orbit (NGSO) satellite) needs to frequently change a connected ground station and inform AMF of changes in a TA list it services, which generates a large amount of signaling on an N2 interface. In order to reduce signaling overhead of the N2 interface, the following two solutions are proposed to enhance the fifth-generation (5th-Generation, 5G) mobile communication network architecture to reduce the impact of N2 interface signaling:
Solution 1: distributed AMF is adopted; specifically, distributed AMFs are deployed close to ground stations, and the local AMF processes N2 signaling; in this solution, the local AMF needs to store a TA list served by a connected base station deployed on the satellite;
Solution 2: AMF agent is adopted; specifically, AMF agents are deployed close to the ground station, and the AMF agent is used to process N2 signaling and transmit an N2 message between the base station (gNB) and the AMF. No modification is required for AMF

As can be seen from the above description, the above two solutions are to modify the ground AMF or add ground AMF agents, and the satellite actually only has access capabilities and cannot provide differentiated services for multiple application scenarios, and data services still need to return to core network on the ground for processing.

In the embodiment of the present disclosure, at least some functions of the core network are deployed on a satellite (hereinafter referred to as a satellite core network), and network isolation and service experience guarantee are provided through network slicing (which may also be referred to as slicing). The functions and advantages of the satellite core network are specifically reflected in the following aspects, that is, the solution of the embodiment of the present disclosure can be applied to the following scenarios:
1. In areas or regions such as islands, oceans, and mountainous areas where 5G core Network (5GC) deployment is difficult or costly, the satellite core network can reduce communication delays and signaling overhead, increase effective rates, and meet personal needs.
2. Through the satellite core network, edge computing and data not leaving the premise can be provided for areas such as islands, oceans, and mountainous areas, and can meet needs of the industrial internet, internet of vehicles, military facilities, etc.
3. Satellite-based network slicing can be realized through the satellite core network, thereby strengthening the global resource scheduling and quality assurance of the space-ground integration network.
4. In disaster scenarios and abnormal traffic peak scenarios, the satellite core network can provide disaster recovery backup and load sharing for the ground core network.
5. For countries/regions with poor ground communication infrastructure and sparse population, international roaming and overseas operation services can be provided through the satellite core network with the support of local policies.

When the core network is deployed on a satellite, the problem of UE mobility management still needs to be considered. This problem can be referred as mobility management problem of the mobile satellite coverage area, to ensure network slicing isolation and service guarantee under satellite access.

In view of this, in various embodiments of the present disclosure, the satellite core network adjusts a strategy of a satellite serving a certain network slice instance in real time based on ephemeris information (including satellite precise position, satellite trajectory, satellite connection capability, etc.) and location of UE, thereby selecting an optimal network connection solution, which can meet the resource isolation, quality assurance and service customization requirements of different application scenarios (such as scenarios with network requirements such as delay, uplink and downlink bandwidth, deterministic transmission, data not leaving the premise, etc.) .

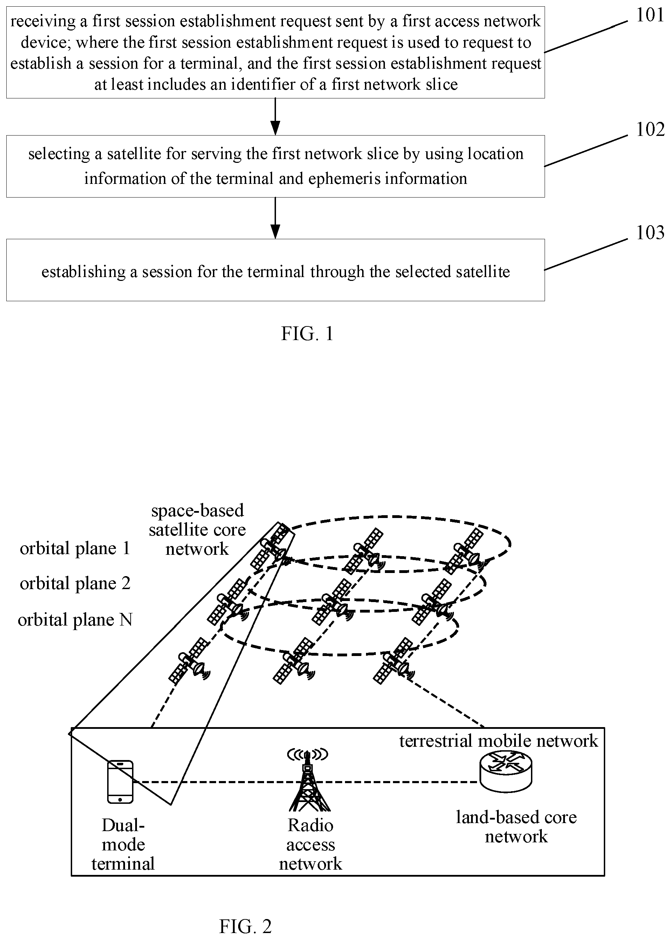

One embodiment of the present disclosure provides a communication method, which is applied to a first satellite core network device. As shown in FIG. 1, the method includes:
Step 101: receiving a first session establishment request sent by a first access network device; where the first session establishment request is used to request to establish a session for a terminal, and the first session establishment request at least includes an identifier of a first network slice;
Step 102: selecting a satellite for serving the first network slice by using location information of the terminal and ephemeris information;
Step 103: establishing a session for the terminal through the selected satellite.

The satellite core network device refers to a core network device deployed on the satellite. For example, AMF is deployed on the satellite, and the core network device may include the AMF, which is not limited in the embodiment of the present disclosure, as long as its function is realized.

The access network device provides network access services for terminals, and may specifically be a base station, which is not limited in the embodiment of the present disclosure, as long as its function is realized.

Here, in actual application, the first access network device may be deployed on land or on a satellite, which is not limited in the embodiments of the present disclosure.

The terminal may also be called user equipment (UE) or user.

The identifier of the first network slice may include single network slice selection assistance information (S-NSSAI), which is not limited in this embodiment of the disclosure.

In actual application, the first access network device needs to know the network slice configured by the first satellite core network device and the network slices available in the area where the terminal is located, so as to select a satellite core network device to access for the terminal.

Based on this, in one embodiment, before the step 101, the method may further include:
receiving a first registration request sent by the first access network device, where the first registration request is used to request registration for the terminal;
after the terminal is successfully registered, returning registration-related information to the first access network device, where the registration-related information includes the identifier of the configured network slice and an identifier of a network slice available in an area where the terminal is located.

When subscription information of the terminal includes that the terminal is a satellite user, it is determined that the terminal is successfully registered.

The identifier of the network slice may include network slice selection assistance information (NSSAI), which is not limited in this embodiment of the disclosure.

In the step 101, when the first access network receives the session establishment request sent by the terminal and determines selecting the satellite core network, the first access network sends the first session establishment request to the first satellite core network device. The first session establishment request may carry the first network slice, and may also carry location information of the terminal.

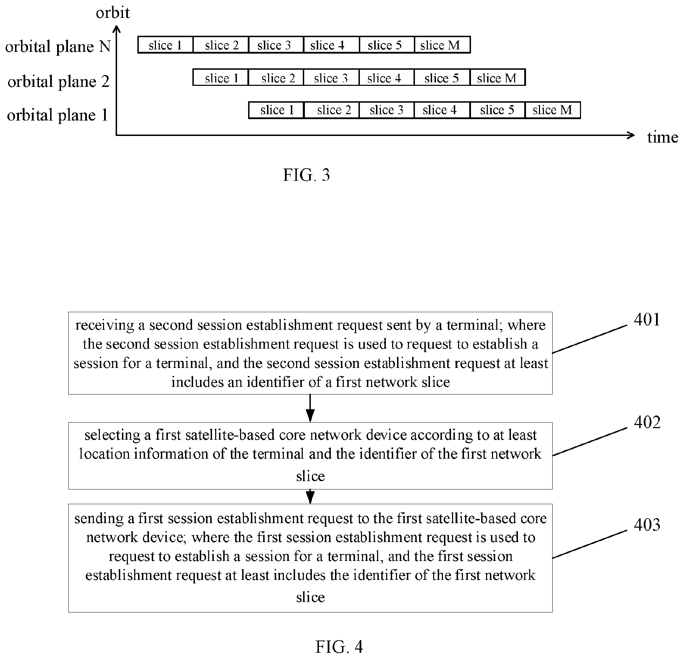

In the step 102, the first satellite core network device uses the location information of the terminal and ephemeris information to determine the satellite serving the first network slice. In order to implement the solution provided by the embodiment of the present disclosure, in actual application, as shown in FIG. 2, each satellite can have at least core network device function of performing the steps 101 to 103, or a satellite constellation in each orbital plane (multiple satellites on the same orbital plane form a constellation, and the multiple satellites are connected through star links, so that corresponding information can be transmitted) at least has the core network device function of performing the steps 101 to 103. Since the satellite runs on the corresponding orbit, that is, the satellite is mobile, when the terminal's position is determined, as shown in FIG. 3, the service time of the network slice provided by each orbital plane for the terminal is limited. Therefore, this factor needs to be considered when selecting a satellite for a certain network slice for the terminal.

Based on this, in one embodiment, the specific implementation of step 102 may include:
according to the location information of the terminal and ephemeris information, selecting a satellite supporting the first network slice, which the terminal accesses within a time period.

In actual application, the location information of the terminal may include longitude and/or latitude information of the location of the terminal. In this embodiment of the present disclosure, the terminal supports fixed connection capabilities (that is, the ability to connect to a fixed network) and mobile connection capabilities (that is, the ability to connect to a mobile network). According to the location information of the terminal, fixed connection coverage, mobile connection coverage and other information of the network where the terminal is located, can be obtained.

According to the ephemeris information, the precise position of the satellite, satellite trajectory, satellite connection capability, etc. can be obtained. In practical application, when the satellite is registered and connected to the network, the corresponding ephemeris information can be configured to the first satellite core network device, so that the first satellite core network device can obtain the ephemeris information.

In this embodiment of the present disclosure, the terminal supports transmitting its location information to the core network (including the core network deployed on land and satellite core network) when the terminal is powered on or registered, and also supports updating its location information to the core network regardless of whether it is in idle or connected state.

The time period can be understood as a timer (which can be expressed as timer in English), and the time period can be set as needed. For example, usually, a coverage duration of a satellite in a TA is 10-15 minutes, so the time period may be set to 15 minutes, which is not limited in this embodiment of the disclosure.

Here, in actual application, the first satellite core network device may select a satellite for the terminal based on factors such as the network slice supported by the satellite, the TA list and/or the cell served by the first access network device, and the time period.

In this embodiment of the present disclosure, at least one of the following conditions is met between the network slice and the satellite:
one network slice is supported by a single bearer of one satellite;
one network slice is supported by one satellite;
one satellite supports one network slice;
multiple bearers of one satellite support multiple network slices.

In practical applications, from the perspective of network slicing, terminals in the same area can access multiple network slices. One network slice can be supported by a single bearer of one satellite or by a single satellite. From the perspective of satellites, the same area can be covered by one or more satellites at the same time. For one satellite, a single network slice can be supported, that is, one satellite supports one network slice, or multiple network slices can be supported through multiple bearers.

In one embodiment, the first satellite core network device may determine a satellite that supports the first network slice by using a first mapping relationship and/or a second mapping relationship. The first mapping relationship includes a mapping relationship between a network slice and a satellite bearer, and the second mapping relationship includes a mapping relationship between a network slice and a satellite, so as to select a satellite supporting the first network slice for the terminal.

Here, when the first satellite core network device determines that there are multiple candidate satellites, that is, when the location of the terminal has multiple satellites that can support the first network slice, the first satellite core network device may select a satellite from the multiple candidate satellites as needed, such as preferably selecting the satellite with the strongest signal strength, or selecting a satellite based on load of the satellite, etc., which is not limited in the embodiment of the present disclosure.

In the embodiment of the present disclosure, when the orbital plane satellite (that is, the selected satellite) leaves the area to which the terminal's location belongs, that is, when the orbital plane satellite does not cover the area to which the terminal's location belongs, the first network slice can be supported by other orbital satellites which cover the area. Therefore, when an access duration of the terminal exceeds an access duration that the satellite can provide (that is, the selected satellite leaves the area to which the terminal's location belongs), then satellite switching is required. That is to say, when the access duration of the terminal exceeds the access duration provided by the selected satellite, a satellite supporting the first network slice that the terminal accesses within a time period, is reselected according to the location information of the terminal and ephemeris information, to ensure service continuity.

The ephemeris information represents satellite orbit parameters. The ephemeris information can be used to obtain a predetermined position of the satellite at regular intervals. The ephemeris information can also be referred as ephemeris data or ephemeris table, which is not limited in the embodiment of the present disclosure, as long as its function is realized.

The selected satellite provides the terminal with a service based on the first network slice, so service processing functions can be deployed on the satellite, such as content delivery network (CDN), cache, mobile edge computing (MEC), etc.

Based on this, in one embodiment, selecting a satellite serving the first network slice, may include:
determining a satellite UPF and/or satellite service platform serving the first network slice.

The satellite UPF means that the UPF is deployed on the satellite; correspondingly, the satellite service platform means that the service platform is deployed on the satellite.

In actual application, the first satellite core network device may determine the satellite UPF and/or satellite service platform that serves the first network slice as needed, such as determining the satellite UPF and/or satellite service platform that serves the first network slice according to QoS requirements of the first network slice. The present disclosure embodiment does not limit the specific processing procedure of how to determine the satellite UPF and/or satellite service platform serving the first network slice.

In actual application, in order to ensure the service continuity of the terminal after the terminal moves, the first satellite core network device needs to synchronize the user information of the terminal with the ground core network, so that when the terminal moves and selects the ground core network to provide slice service, the ground core network can provide slice service in time.

Based on this, in one embodiment, the method may further include:
synchronizing user information of the terminal with the ground core network.

In one embodiment, the user information may include at least one of the following:
location information of the terminal;
subscribed network slice information;
TA related information;
AMF related information, such as AMF identifier (such as ID) and/or AMF list, etc.;
NSSP.

Here, in actual application, the first satellite core network device can also synchronize other information with the ground core network, such as timers for different satellites to cover the same TA, that is, coverage duration of the same TA, etc., which is not limited in the embodiment of the present disclosure.

In actual application, the N14 interface can be enhanced, and the first satellite core network device synchronizes corresponding information with the ground core network through the N14 interface.

When the terminal moves and the first satellite core network device is unable to provide services for the terminal, the satellite core network device needs to be switched to ensure service continuity.

Based on this, in one embodiment, the method may further include:
transferring context information of the terminal to the second satellite core network device.

Here, in actual application, the first satellite core network device can directly send the context information of the terminal to the second satellite core network device through the interface between the first satellite core network device and the second satellite core network device. That is, the first satellite core network device transmits the context information of the terminal to the second satellite core network device through the interface between the first satellite core network device and the second satellite core network device, such as the enhanced N14 interface, and the first satellite core network device sends the context information of the terminal to the second satellite core network device through the N14 interface.

The first satellite core network device may also transfer the context information of the terminal to the second satellite core network device through the first access network device.

The first satellite core network device may also transmit the context information of the terminal to the second satellite core network device through the first access network device and the second access network device in sequence.

The second access network device may be deployed on a satellite or on land, which is not limited in this embodiment of the present disclosure.

In actual application, one of the above transmission modes can be selected to transmit the context information of the terminal as needed.

Correspondingly, one embodiment of the present disclosure further provides a communication method, applied to a first access network device. As shown in FIG. 4, the method includes:
Step 401: receiving a second session establishment request sent by a terminal; where the second session establishment request is used to request to establish a session for a terminal, and the second session establishment request at least includes an identifier of a first network slice;
Step 402: selecting a first satellite core network device according to at least location information of the terminal and the identifier of the first network slice;
Step 403: sending a first session establishment request to the first satellite core network device; where the first session establishment request is used to request to establish a session for a terminal, and the first session establishment request at least includes the identifier of the first network slice.

In one embodiment, before performing the step 401, the method may further include:
receiving a second registration request sent by the terminal, where the second registration request is used to request registration for the terminal;
selecting the first satellite core network device for the terminal;
sending a first registration request to the first satellite core network device, where the first registration request is used to request registration for the terminal;
receiving registration-related information returned by a first access network device, where the registration-related information includes the identifier of the configured network slice and an identifier of a network slice available in an area where the terminal is located.

Correspondingly, in the step 402, the first access network device selects the first satellite core network device by using at least the identifier of the network slice available in the area where the terminal is located, location information of the terminal, and the identifier of the first network slice.

The second registration request at least carries a requested network slice identifier (which may be a network slice identifier supported by the terminal).

The first access network device can determine whether to select a satellite core network as needed. When determining that a satellite core network needs to be selected, for example, the satellite core network supports the first network slice of the terminal, and its service capabilities are equivalent to those of the terrestrial network, and when the ground network is congested, it is determined to select the satellite core network. For another example, when the terminal is on a fishing boat, it is determined to select a satellite core network, and then a satellite core network device serving the terminal is selected as needed.

In the communication method provided in the embodiment of the present disclosure, the first access network device receives the second session establishment request sent by the terminal, where the second session establishment request is used to request to establish a session for the terminal, and the second session establishment request at least includes the identifier of the first network slice; selects a first satellite core network device based on at least the location information of the terminal and the identifier of the first network slice; and sends a first session establishment request to the first satellite core network device, where the first session establishment request is used to request to establish a session for the terminal. The first session establishment request at least includes the identifier of the first network slice. The first satellite core network device uses the location information of the terminal and ephemeris information to select a satellite serving the first network slice; and uses the selected satellite to establish a session for the terminal. According to the solution provided in the embodiments of the present disclosure, the satellite core network can real-time adjust the strategy of the satellite serving a certain network slicing instance based on ephemeris information and location information of the terminal, so as to select the optimal network connection solution. In this way, the resource isolation, quality assurance and service customization requirements of different application scenarios can be met.

The present disclosure will be described in details hereinafter in conjunction with application examples.

In an application embodiment, AMF is deployed on a satellite, which is called satellite AMF (also called on-satellite AMF) in the following description; and unified data management (UDM) deployed on land is called ground UDM; AMF deployed on land is called ground AMF; network slice selection function (NSSF) deployed on land is called ground NSSF; session management function (SMF) deployed on satellites is called satellite SMF; and radio access network (RAN) deployed on satellites is called satellite RAN.

In this application embodiment, the satellite core network can dynamically switch network slices to achieve single or multiple bearer of multiple network slice strategies.

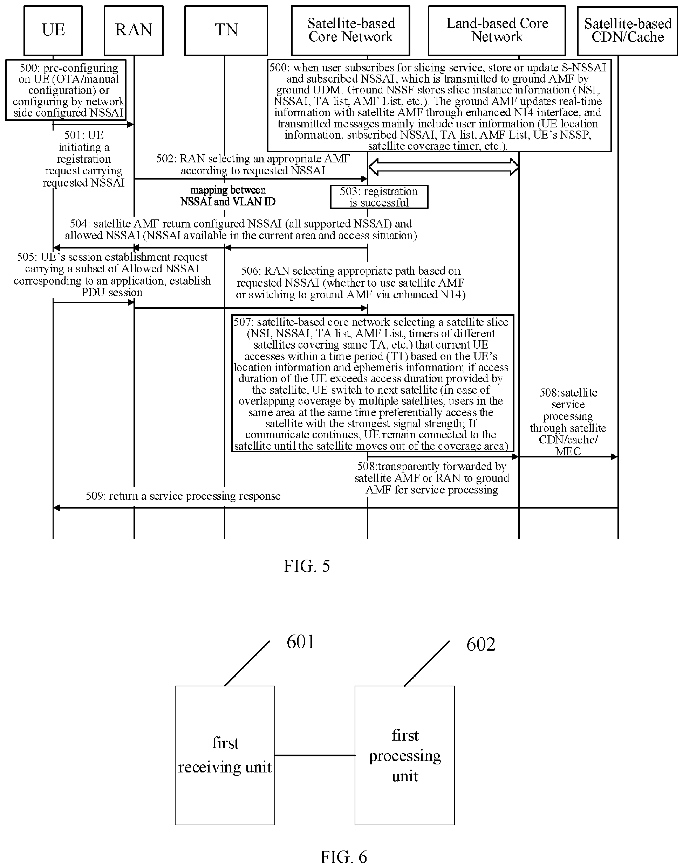

The processing flow of network slicing data services in this application embodiment is shown in FIG. 5, and includes the following steps:
Step 500: pre-configuring process including pre-configuring on UE or configuring by network side, NSSAI (the configured NSSAI can be expressed in English as configured NSSAI), and then performing step 501;

Here, pre-configuring NSSAI may include over-the-air technology (OTA) configuration and/or manual configuration.

That is to say, a method of allocating network slices is consistent with the process of allocating network slice identifiers through network management contracts in related art.

S-NSSAI is stored or updated when the user subscribes for the slicing service, and the network allocates subscribed NSSAI (which can be expressed as subscribed NSSAI in English), which is transmitted to the ground AMF by the ground unified data management (UDM). Ground NSSF stores slice instance information (including network slice instance (NSI), NSSAI, TA list, AMF List, etc.), at least for AMF reselection. The ground AMF updates real-time information with the satellite AMF through the enhanced N14 interface, and the transmitted messages mainly include user information (including UE location information, subscribed NSSAI, TA list, AMF List, UE's NSSP, etc.). When the user subscribes, the user can be a satellite user.

Step 501: UE initiating a registration request.

Here, the registration request carries requested NSSAI.

Step 502: after receiving the registration request, a radio access network (RAN) (i.e., the above first access network device) selecting an appropriate satellite AMF currently in the UE coverage area according to the requested NSSAI.

In the transmission network (TN), NSSAI needs to be mapped to corresponding virtual local area network (VLAN) identifier (ID) to find a suitable bearer network channel for message transmission.

Step 503: since the user of the UE is a satellite user, the user information of the UE is available on the satellite AMF, indicating that the UE registration is successful, and then performing step 504.

Step 504: the satellite AMF returning to the UE the configured NSSAI (i.e., all supported NSSAI) of the satellite AMF and allowed NSSAI (i.e., NSSAI available in the current area and access situation, that is, available NSSAI in the area where the UE is located), then performing step 505.

When the RAN is a ground RAN, the satellite AMF returns the configured NSSAI and allowed NSSAI to the UE through the TN and RAN in sequence. Correspondingly, when the RAN is a satellite RAN, the satellite AMF returns the configured NSSAI and allowed NSSAI to the UE through the RAN.

Step 505: after receiving the NSSAI returned by the satellite AMF, the UE initiating a session establishment request for requesting to establish a protocol data unit (PDU) session.

Here, the session establishment request carries S-NSSAI of slice 1 corresponding to an application, which is a subset of the Allowed NSSAI.

Step 506: after receiving the session establishment request, the RAN selecting an appropriate path based on the S-NSSAI of slice 1.

Here, the RAN selects whether to use the satellite AMF for servicing or ground AMF for servicing (this step supports RAN's AMF redirection technology).

When the satellite AMF service is selected, step 507 is performed.

Step 507: after receiving the session establishment request, the satellite AMF selecting a satellite that the current UE accesses within a time period (T1) based on the UE's location information and ephemeris information, and then performing step 508;
Specifically, the satellite AMF can select the satellite that the UE currently accesses based on relevant information (such as NSI, NSSAI (i.e., slice 1), TA list, AMF List, timers of different satellites covering the same TA, etc.).

If the access duration of the UE exceeds an access duration provided by the satellite, it is switched to the next satellite. Here, in the case of overlapping coverage by multiple satellites, users in the same area at the same time will preferentially access the satellite with the strongest signal strength. If the UE continues to communicate, the UE will remain connected to the satellite until the satellite moves out of the coverage area.

Step 508: the satellite AMF determining whether the network slice identifier can be supported based on the network slice identifier (i.e., slice 1) carried by the user, thereby determining whether the service is processed by the satellite CDN/Cache/MEC, or returning through the enhanced N14 interface or RAN to the ground AMF for processing the session corresponding to the slice 1.

Here, when the satellite AMF supports the network slice identifier and it is determined that the satellite CDN/Cache/MEC processes the service, corresponding QoS is started based on the currently accessed network slice identifier, and then identification of the corresponding satellite UPF is completed through the satellite SMF, and is transferred to the satellite CDN/Cache/MEC (i.e., the above satellite service platform) for service processing, and then the step 509 is performed. When the satellite AMF does not support the network slice identifier and it is determined that the ground AMF processes the service, the satellite AMF transparently forwards it to the ground AMF through N14 interface or RAN for service processing.

Step 509: the satellite CDN/Cache/MEC returning a service processing response.

In the above process, the satellite AMF and the ground AMF perform data synchronization through the N14 interface, which can also be understood as updating. The updated data includes: user information and timers of different satellites covering the same TA, etc.

In the above process, when satellite AMF handover is required, the N14 interface between satellite AMFs can be used to directly exchange the context information of the UE, or the satellite RAN and the next satellite AMF can establish an enhanced N2 interface to transfer the context information of the UE, or the context information of the UE can be transferred via an Xn interface over a link between RANs.

As can be seen from the above description, this application embodiment provides a solution to realize network slicing isolation and service guarantee under satellite access, and the network slicing dynamic switching technology of the satellite core network can realize concurrent bearing of multiple slicing strategies, that is, the strategy of adjusting a satellite in an orbital plane serving a certain network slice instance in real time based on the ephemeris information and the UE's location. Adopting the solutions of the embodiments of the present disclosure can meet resource isolation, quality assurance and service customization requirements of different elements and different application scenarios.

In order to implement the method of the first satellite core network device in the embodiment of the present disclosure, one embodiment of the present disclosure further provides a communication device, which is provided on the first satellite core network device. As shown in FIG. 6, the device includes:
a first receiving unit 601 used to receive a first session establishment request sent by a first access network device; where the first session establishment request is used to request to establish a session for a terminal, and the first session establishment request at least includes an identifier of a first network slice;
a first processing unit 602 used to select a satellite for serving the first network slice by using location information of the terminal and ephemeris information; and establish a session for the terminal through the selected satellite.

In one embodiment, the first processing unit 602 is used to select a satellite supporting the first network slice, which the terminal accesses within a time period, according to the location information of the terminal and ephemeris information.

Here, in one embodiment, when an access duration of the terminal exceeds an access duration provided by the selected satellite, the first processing unit 602 reselects a satellite supporting the first network slice that the terminal accesses within a time period, according to the location information of the terminal and ephemeris information.

In one embodiment, the first processing unit 602 is used to, when determining a satellite serving the first network slice, determine a satellite UPF and/or satellite service platform serving the first network slice.

In one embodiment, at least one of the following conditions is met between the network slice and the satellite:
one network slice is supported by a single bearer of one satellite;
one network slice is supported by one satellite;
one satellite supports one network slice;
multiple bearers of one satellite support multiple network slices.

In one embodiment, the first processing unit 602 is further used to,
determine a satellite that supports the first network slice by using a first mapping relationship and/or a second mapping relationship; where the first mapping relationship includes a mapping relationship between a network slice and a satellite bearer, and the second mapping relationship includes a mapping relationship between a network slice and a satellite.

In one embodiment, the first processing unit 602 is further used to synchronize user information of the terminal with the ground core network.

In one embodiment, the first receiving unit 601 is further used to receive a first registration request sent by the first access network device, where the first registration request is used to request registration for the terminal.

The first processing unit 602 is further used to, after the terminal is successfully registered, return registration-related information to the first access network device, where the registration-related information includes the identifier of the configured network slice and an identifier of a network slice available in an area where the terminal is located.

In one embodiment, the first processing unit 602 is further used to transfer context information of the terminal to the second satellite core network device.

In one embodiment, the first processing unit 602 is used to transfer the context information of the terminal to the second satellite core network device in one of the following ways:
transferring context information of the terminal to the second satellite core network device through an interface with the second satellite core network device;
transferring the context information of the terminal to the second satellite core network device through the first access network device;
transferring the context information of the terminal to the second satellite core network device through the first access network device and the second access network device in sequence.

In practical applications, the first receiving unit 601 can be implemented by a communication interface in the communication device, and the first processing unit 602 can be implemented by a processor in a measurement device combined with a communication interface.

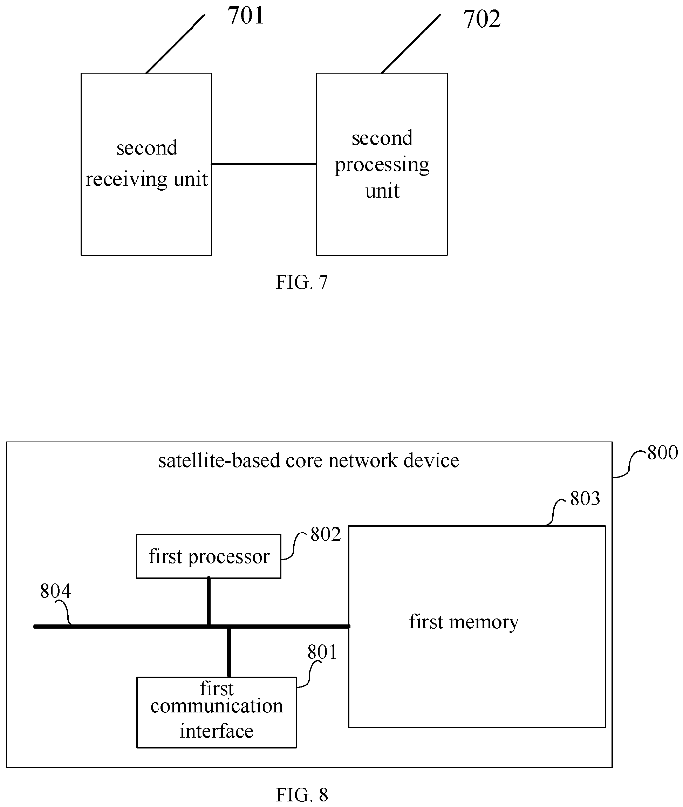

In order to implement the method on the first access network device side of the embodiment of the present disclosure, one embodiment of the present disclosure further provides a communication device, which is provided on the first access network device. As shown in FIG. 7, the device includes:
a second receiving unit 701 used to receive a second session establishment request sent by a terminal; where the second session establishment request is used to request to establish a session for a terminal, and the second session establishment request at least includes an identifier of a first network slice;
a second processing unit 702 used to select a first satellite core network device according to at least location information of the terminal and the identifier of the first network slice; and send a first session establishment request to the first satellite core network device; where the first session establishment request is used to request to establish a session for a terminal, and the first session establishment request at least includes the identifier of the first network slice.

In one embodiment, the second receiving unit 701 is further used to receive a second registration request sent by the terminal, where the second registration request is used to request registration for the terminal; and receive registration-related information returned by the first access network device, where the registration-related information includes the identifier of the configured network slice and an identifier of a network slice available in an area where the terminal is located.

The second processing unit 702 is further used to select the first satellite core network device for the terminal; and send a first registration request to the first satellite core network device, where the first registration request is used to request registration for the terminal.

The second processing unit 702 selects the first satellite core network device by using at least the identifier of the network slice available in the area where the terminal is located, the location information of the terminal, and the identifier of the first network slice.

In practical applications, the second receiving unit 701 can be implemented by a communication interface in the communication device, and the second processing unit 702 can be implemented by a processor in a measurement device combined with a communication interface.

It should be noted that when the communication device provided in the above embodiment is only illustrated by division of the above program modules when performing communication. In actual application, the above processing can be assigned to different program modules as needed, that is, the internal structure of the device is divided into different program modules to complete all or part of the above processing. In addition, the communication device provided in the above embodiment and the communication method embodiment belong to the same concept, and the specific implementation process is detailed in the method embodiment and will not be repeated here.

Based on the hardware implementation of the above program module, and in order to implement the method on the first satellite core network device side of the embodiment of the disclosure, one embodiment of the present disclosure further provides a satellite core network device. As shown in FIG. 8, the satellite core network device 800 includes:
a first communication interface 801 used to exchange information with a first access network device;
a first processor 802 connected to the first communication interface 801 to exchange the information with the first access network device, and used to perform the method provided in one or more technical solutions of the first satellite core network device side when running the computer program;
a first memory 803 including a computer program stored thereon.

Specifically, the first communication interface 801 is used to receive a first session establishment request sent by a first access network device; where the first session establishment request is used to request to establish a session for a terminal, and the first session establishment request at least includes an identifier of a first network slice.

The first processor 802 is used to select a satellite for serving the first network slice by using location information of the terminal and ephemeris information; and establish a session for the terminal through the selected satellite.

In one embodiment, the first processor 802 is used to select a satellite supporting the first network slice, which the terminal accesses within a time period, according to the location information of the terminal and ephemeris information.

Here, in one embodiment, when an access duration of the terminal exceeds an access duration provided by the selected satellite, the first processor 802 reselects a satellite supporting the first network slice that the terminal accesses within a time period, according to the location information of the terminal and ephemeris information.

In one embodiment, the first processor 802 is used to, when determining a satellite serving the first network slice, determine a satellite UPF and/or satellite service platform serving the first network slice.

In one embodiment, at least one of the following conditions is met between the network slice and the satellite:
one network slice is supported by a single bearer of one satellite;
one network slice is supported by one satellite;
one satellite supports one network slice;
multiple bearers of one satellite support multiple network slices.

In one embodiment, the first processor 802 is further used to,
determine a satellite that supports the first network slice by using a first mapping relationship and/or a second mapping relationship; where the first mapping relationship includes a mapping relationship between a network slice and a satellite bearer, and the second mapping relationship includes a mapping relationship between a network slice and a satellite.

In one embodiment, the first processor 802 is further used to synchronize user information of the terminal with the ground core network.

In one embodiment, the first communication interface 801 is further used to receive a first registration request sent by the first access network device, where the first registration request is used to request registration for the terminal.

The first processor 802 is further used to, after the terminal is successfully registered, return registration-related information to the first access network device, where the registration-related information includes the identifier of the configured network slice and an identifier of a network slice available in an area where the terminal is located.

In one embodiment, the first processor 802 is further used to transfer context information of the terminal to the second satellite core network device.

In one embodiment, the first processor 802 is further used to transfer the context information of the terminal to the second satellite core network device in one of the following ways:
transferring context information of the terminal to the second satellite core network device through an interface with the second satellite core network device;
transferring the context information of the terminal to the second satellite core network device through the first access network device;
transferring the context information of the terminal to the second satellite core network device through the first access network device and the second access network device in sequence.

It is to be noted that the specific processing procedures of the first processor 802 and the first communication interface 801 can be understood with reference to the above method.

Of course, in actual application, various components in the satellite core network device 800 are coupled together through a bus system 804. It can be understood that the bus system 804 is used to implement connection communication between these components. In addition to the data bus, the bus system 804 further includes a power bus, a control bus and a status signal bus. However, for the sake of clarity, the various buses are labeled as bus system 804 in FIG. 8.

The first memory 803 in the embodiment of the present disclosure is used to store various types of data to support operation of the satellite core network device 800. Examples of such data include any computer program used to operate on the satellite core network device 800.

The methods disclosed in the above embodiments of the present disclosure may be applied to the first processor 802 or implemented by the first processor 802. The first processor 802 may be an integrated circuit chip with signal processing capabilities. During the implementation process, each step of the above method can be completed by hardware integrated logic circuits or instructions in the form of software in the first processor 802. The above first processor 802 may be a general-purpose processor, a digital signal processor (DSP), or other programmable logic devices, discrete gate or transistor logic devices, discrete hardware components, etc. The first processor 802 can implement or execute the disclosed methods, steps and logical block diagrams in the embodiments of the present disclosure. The general-purpose processor may be a microprocessor or any conventional processor, etc. The steps of the method disclosed in conjunction with the embodiments of the present disclosure can be directly implemented by a hardware decoding processor, or executed by a combination of hardware and software modules in the decoding processor. The software module may be located in a storage medium, and the storage medium is located in the first memory 803. The first processor 802 reads the information in the first memory 803, and completes the steps of the foregoing method in combination with its hardware.

In an exemplary embodiment, the satellite core network device 800 may be implemented by one or more application specific integrated circuits (ASIC), DSP, programmable logic device (PLD), complex programmable logic device (CPLD), field programmable gate array (FPGA), general processor, controller, microcontroller (MCU), microprocessor, or other electronic components to perform the aforementioned method.

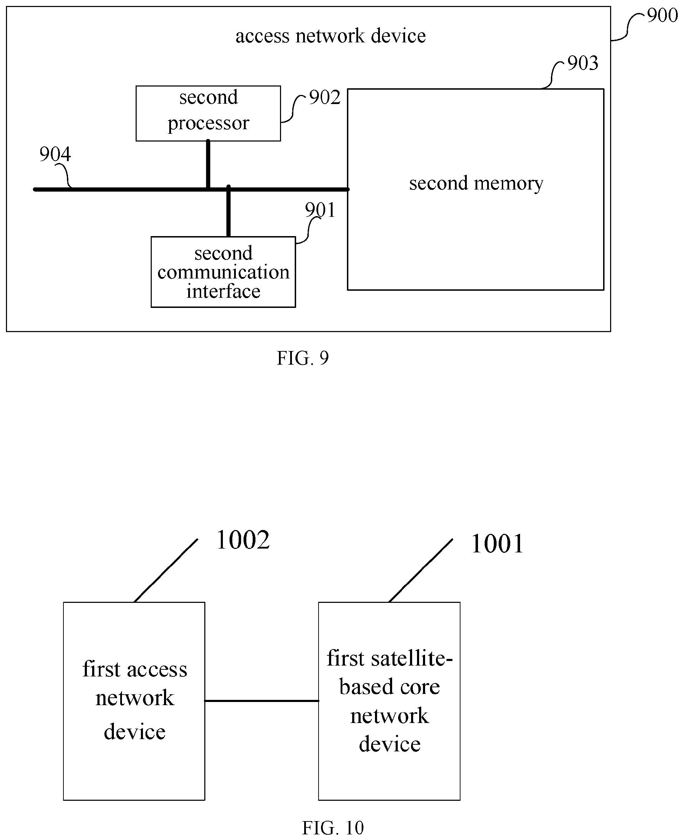

Based on the hardware implementation of the above program module, and in order to implement the method on the first access network device side of the embodiment of the disclosure, one embodiment of the present disclosure further provides an access network device. As shown in FIG. 9, the access network device 900 includes:
a second communication interface 901 used to exchange the information with a first satellite core network device;
a second processor 902 connected to the second communication interface 901 to exchange the information with the first satellite core network device, and used to perform the method provided in one or more technical solutions of the first access network device side when running the computer program;
a second memory 903 including a computer program stored thereon.

Specifically, the second communication interface 901 is used to receive a second session establishment request sent by a terminal; where the second session establishment request is used to request to establish a session for a terminal, and the second session establishment request at least includes an identifier of a first network slice; and send a first session establishment request to the first satellite core network device; where the first session establishment request is used to request to establish a session for a terminal, and the first session establishment request at least includes the identifier of the first network slice.

The second processor 902 is used to select a first satellite core network device according to at least location information of the terminal and the identifier of the first network slice.

In one embodiment, the second communication interface 901 is further used to receive a second registration request sent by the terminal, where the second registration request is used to request registration for the terminal; and receive registration-related information returned by a first access network device, where the registration-related information includes the identifier of the configured network slice and an identifier of a network slice available in an area where the terminal is located.

The second processor 902 is further used to select the first satellite core network device for the terminal; and send, through the second communication interface 901, a first registration request to the first satellite core network device, where the first registration request is used to request registration for the terminal.

The second processor 902 selects the first satellite core network device by using at least the identifier of the network slice available in the area where the terminal is located, location information of the terminal, and the identifier of the first network slice.

It is to be noted that the specific processing procedures of the second communication interface 901 and the second processor 902 can be understood with reference to the above method.

Of course, in actual application, various components in the access network device 900 are coupled together through a bus system 904. It can be understood that the bus system 904 is used to implement connection communication between these components. In addition to the data bus, the bus system 904 further includes a power bus, a control bus and a status signal bus. However, for the sake of clarity, various buses are labeled as bus system 904 in FIG. 9.

The second memory 903 in the embodiment of the present disclosure is used to store various types of data to support operation of the access network device 900. Examples of such data include any computer program used to operate on the access network device 900.

The methods disclosed in the above embodiments of the present disclosure may be applied to the second processor 902 or implemented by the second processor 902. The second processor 902 may be an integrated circuit chip with signal processing capabilities. During the implementation process, each step of the above method can be completed by hardware integrated logic circuits or instructions in the form of software in the second processor 902. The above second processor 902 may be a general-purpose processor, a digital signal processor (DSP), or other programmable logic devices, discrete gate or transistor logic devices, discrete hardware components, etc. The second processor 902 can implement or execute the disclosed methods, steps and logical block diagrams in the embodiments of the present disclosure. The general-purpose processor may be a microprocessor or any conventional processor, etc. The steps of the method disclosed in conjunction with the embodiments of the present disclosure can be directly implemented by a hardware decoding processor, or executed by a combination of hardware and software modules in the decoding processor. The software module may be located in a storage medium, and the storage medium is located in the second memory 903. The second processor 902 reads the information in the second memory 903, and completes the steps of the foregoing method in combination with its hardware.

In an exemplary embodiment, the access network device 900 may be implemented by one or more application specific integrated circuits (ASIC), DSP, programmable logic device (PLD), complex programmable logic device (CPLD), field programmable gate array (FPGA), general processor, controller, microcontroller (MCU), microprocessor, or other electronic components to perform the aforementioned method.

It can be understood that the memory (the first memory 803, the second memory 903) in the embodiment of the present disclosure may be a volatile memory or a non-volatile memory, or may include both volatile and non-volatile memory. The non-volatile memory may be a read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM). The magnetic surface memory can be a magnetic disk memory or a magnetic tape memory. The volatile memory may be random access memory (RAM), which is used as an external cache. By way of illustration, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), direct rambus random access memory (DRRAM). The memory described in embodiments of the present disclosure is intended to include, but is not limited to, these and any other suitable types of memory.

In order to implement the method provided in the embodiment of the present disclosure, one embodiment of the present disclosure further provides a communication system. As shown in FIG. 10, the system includes: a first satellite core network device 1001 and a first access network device 1002.

Here, it is to be noted that the specific processing procedures of the first satellite core network device 1001 and the first access network device 1002 have been described in detail above and will not be described again here.

In an exemplary embodiment, one embodiment of the present disclosure further provides a storage medium, that is, a computer storage medium, specifically a computer-readable storage medium, for example, including a first memory 803 that stores a computer program. The above computer program can be performed by the first processor 802 of the satellite core network device 800 to perform the steps of the method on the first satellite core network device side. For another example, a second memory 903 for storing a computer program is included, and the computer program can be executed by the second processor 902 of the access network device 900 to perform the steps of the method on the first access network device side. The computer-readable storage medium can be a memory such as FRAM, ROM, PROM, EPROM, EEPROM, Flash Memory, magnetic surface memory, optical disk, or CD-ROM.

It is to be noted that "first", "second", etc., are used to distinguish similar objects and are not necessarily used to describe a specific order or sequence.

In addition, the technical solutions described in the embodiments of the present disclosure may be combined arbitrarily as long as there is no conflict.

The above descriptions are only preferred embodiments of the present disclosure and are not intended to limit the scope of the present disclosure.

In one embodiment, the first processor 802 is further used to transfer the context information of the terminal to the second satellite-based core network device in one of the following ways:
transferring context information of the terminal to the second satellite-based core network device through an interface with the second satellite-based core network device;
transferring the context information of the terminal to the second satellite-based core network device through the first access network device;
transferring the context information of the terminal to the second satellite-based core network device through the first access network device and the second access network device in sequence.

It is to be noted that the specific processing procedures of the first processor 802 and the first communication interface 801 can be understood with reference to the above method.

Of course, in actual application, various components in the satellite-based core network device 800 are coupled together through a bus system 804. It can be understood that the bus system 804 is used to implement connection communication between these components. In addition to the data bus, the bus system 804 further includes a power bus, a control bus and a status signal bus. However, for the sake of clarity, the various buses are labeled as bus system 804 in FIG. 8.

The first memory 803 in the embodiment of the present disclosure is used to store various types of data to support operation of the satellite-based core network device 800. Examples of such data include any computer program used to operate on the satellite-based core network device 800.

The methods disclosed in the above embodiments of the present disclosure may be applied to the first processor 802 or implemented by the first processor 802. The first processor 802 may be an integrated circuit chip with signal processing capabilities. During the implementation process, each step of the above method can be completed by hardware integrated logic circuits or instructions in the form of software in the first processor 802. The above first processor 802 may be a general-purpose processor, a digital signal processor (DSP), or other programmable logic devices, discrete gate or transistor logic devices, discrete hardware components, etc. The first processor 802 can implement or execute the disclosed methods, steps and logical block diagrams in the embodiments of the present disclosure. The general-purpose processor may be a microprocessor or any conventional processor, etc. The steps of the method disclosed in conjunction with the embodiments of the present disclosure can be directly implemented by a hardware decoding processor, or executed by a combination of hardware and software modules in the decoding processor. The software module may be located in a storage medium, and the storage medium is located in the first memory 803. The first processor 802 reads the information in the first memory 803, and completes the steps of the foregoing method in combination with its hardware.

In an exemplary embodiment, the satellite-based core network device 800 may be implemented by one or more application specific integrated circuits (ASIC), DSP, programmable logic device (PLD), complex programmable logic device (CPLD), field programmable gate array (FPGA), general processor, controller, microcontroller (MCU), microprocessor, or other electronic components to perform the aforementioned method.

Based on the hardware implementation of the above program module, and in order to implement the method on the first access network device side of the embodiment of the disclosure, one embodiment of the present disclosure further provides an access network device. As shown in FIG. 9, the access network device 900 includes:
a second communication interface 901 used to exchange the information with a first satellite-based core network device;
a second processor 902 connected to the second communication interface 901 to exchange the information with the first satellite-based core network device, and used to perform the method provided in one or more technical solutions of the first access network device side when running the computer program;
a second memory 903 including a computer program stored thereon.

Specifically, the second communication interface 901 is used to receive a second session establishment request sent by a terminal; where the second session establishment request is used to request to establish a session for a terminal, and the second session establishment request at least includes an identifier of a first network slice; and send a first session establishment request to the first satellite-based core network device; where the first session establishment request is used to request to establish a session for a terminal, and the first session establishment request at least includes the identifier of the first network slice.

The second processor 902 is used to select a first satellite-based core network device according to at least location information of the terminal and the identifier of the first network slice.

In one embodiment, the second communication interface 901 is further used to receive a second registration request sent by the terminal, where the second registration request is used to request registration for the terminal; and receive registration-related information returned by a first access network device, where the registration-related information includes the identifier of the configured network slice and an identifier of a network slice available in an area where the terminal is located.

The second processor 902 is further used to select the first satellite-based core network device for the terminal; and send, through the second communication interface 901, a first registration request to the first satellite-based core network device, where the first registration request is used to request registration for the terminal.

The second processor 902 selects the first satellite-based core network device by using at least the identifier of the network slice available in the area where the terminal is located, location information of the terminal, and the identifier of the first network slice.

It is to be noted that the specific processing procedures of the second communication interface 901 and the second processor 902 can be understood with reference to the above method.

Of course, in actual application, various components in the access network device 900 are coupled together through a bus system 904. It can be understood that the bus system 904 is used to implement connection communication between these components. In addition to the data bus, the bus system 904 further includes a power bus, a control bus and a status signal bus. However, for the sake of clarity, various buses are labeled as bus system 904 in FIG. 9.

The second memory 903 in the embodiment of the present disclosure is used to store various types of data to support operation of the access network device 900. Examples of such data include any computer program used to operate on the access network device 900.

The methods disclosed in the above embodiments of the present disclosure may be applied to the second processor 902 or implemented by the second processor 902. The second processor 902 may be an integrated circuit chip with signal processing capabilities. During the implementation process, each step of the above method can be completed by hardware integrated logic circuits or instructions in the form of software in the second processor 902. The above second processor 902 may be a general-purpose processor, a digital signal processor (DSP), or other programmable logic devices, discrete gate or transistor logic devices, discrete hardware components, etc. The second processor 902 can implement or execute the disclosed methods, steps and logical block diagrams in the embodiments of the present disclosure. The general-purpose processor may be a microprocessor or any conventional processor, etc. The steps of the method disclosed in conjunction with the embodiments of the present disclosure can be directly implemented by a hardware decoding processor, or executed by a combination of hardware and software modules in the decoding processor. The software module may be located in a storage medium, and the storage medium is located in the second memory 903. The second processor 902 reads the information in the second memory 903, and completes the steps of the foregoing method in combination with its hardware.

In an exemplary embodiment, the access network device 900 may be implemented by one or more application specific integrated circuits (ASIC), DSP, programmable logic device (PLD), complex programmable logic device (CPLD), field programmable gate array (FPGA), general processor, controller, microcontroller (MCU), microprocessor, or other electronic components to perform the aforementioned method.

It can be understood that the memory (the first memory 803, the second memory 903) in the embodiment of the present disclosure may be a volatile memory or a non-volatile memory, or may include both volatile and non-volatile memory. The non-volatile memory may be a read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM). The magnetic surface memory can be a magnetic disk memory or a magnetic tape memory. The volatile memory may be random access memory (RAM), which is used as an external cache. By way of illustration, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), direct rambus random access memory (DRRAM). The memory described in embodiments of the present disclosure is intended to include, but is not limited to, these and any other suitable types of memory.

In order to implement the method provided in the embodiment of the present disclosure, one embodiment of the present disclosure further provides a communication system. As shown in FIG. 10, the system includes: a first satellite-based core network device 1001 and a first access network device 1002.

Here, it is to be noted that the specific processing procedures of the first satellite-based core network device 1001 and the first access network device 1002 have been described in detail above and will not be described again here.

In an exemplary embodiment, one embodiment of the present disclosure further provides a storage medium, that is, a computer storage medium, specifically a computer-readable storage medium, for example, including a first memory 803 that stores a computer program. The above computer program can be performed by the first processor 802 of the satellite-based core network device 800 to perform the steps of the method on the first satellite-based core network device side. For another example, a second memory 903 for storing a computer program is included, and the computer program can be executed by the second processor 902 of the access network device 900 to perform the steps of the method on the first access network device side. The computer-readable storage medium can be a memory such as FRAM, ROM, PROM, EPROM, EEPROM, Flash Memory, magnetic surface memory, optical disk, or CD-ROM.

It is to be noted that "first", "second", etc., are used to distinguish similar objects and are not necessarily used to describe a specific order or sequence.

In addition, the technical solutions described in the embodiments of the present disclosure may be combined arbitrarily as long as there is no conflict.

The above descriptions are only preferred embodiments of the present disclosure and are not intended to limit the scope of the present disclosure.

## Claims

1. A communication method performed by a first satellite-based core network device, comprising:
receiving (101) a first session establishment request sent by a first access network device; wherein the first session establishment request is used to request to establish a session for a terminal, and the first session establishment request at least includes an identifier of a first network slice;
selecting (102) a satellite for serving the first network slice by using location information of the terminal and ephemeris information;
establishing (103) a session for the terminal through the selected satellite;
wherein the selecting a satellite for serving the first network slice by using location information of the terminal and ephemeris information, includes:
according to the location information of the terminal and the ephemeris information, selecting a satellite supporting the first network slice, which the terminal accesses within a time period;
wherein when an access duration of the terminal exceeds an access duration provided by the selected satellite, reselecting a satellite supporting the first network slice that the terminal accesses within the time period, according to the location information of the terminal and the ephemeris information.

2. The method according to claim 1, wherein the selecting a satellite for serving the first network slice, includes:
determining a satellite user plane function, UPF, and/or satellite service platform serving the first network slice.

3. The method according to claim 1, wherein at least one of the following conditions is met between the network slice and the satellite:
one network slice is supported by a single bearer of one satellite;
one network slice is supported by one satellite;
one satellite supports one network slice;
multiple bearers of one satellite support multiple network slices.

4. The method according to claim 3, wherein the method further includes:
determining a satellite that supports the first network slice by using a first mapping relationship and/or a second mapping relationship; wherein the first mapping relationship includes a mapping relationship between a network slice and a satellite bearer, and the second mapping relationship includes a mapping relationship between a network slice and a satellite.

5. The method according to claim 1, wherein the method further includes:
synchronizing user information of the terminal with a ground core network.

6. The method according to claim 5, wherein the user information includes at least one of the following:
location information of the terminal;
subscribed network slice information;
tracking area, TA, related information;
access and mobility management function, AMF, related information;
network slice selection policy, NSSP.

7. The method according to claim 1, wherein the method further includes:
receiving a first registration request sent by a first access network device, wherein the first registration request is used to request registration for the terminal;
after the terminal is successfully registered, returning registration-related information to the first access network device, wherein the registration-related information includes an identifier of a configured network slice and an identifier of a network slice available in an area where the terminal is located.

8. The method according to any one of claims 1 to 7, wherein the method further includes:
transferring context information of the terminal to the second satellite core network device.

9. The method according to claim 8, wherein the transferring context information of the terminal to the second satellite core network device, includes:
transferring the context information of the terminal to the second satellite core network device through an interface with the second satellite core network device;
transferring the context information of the terminal to the second satellite core network device through the first access network device;
transferring the context information of the terminal to the second satellite core network device through the first access network device and the second access network device in sequence.

10. A communication method performed by a first access network device, comprising:
receiving (301) a second session establishment request sent by a terminal; wherein the second session establishment request is used to request to establish a session for a terminal, and the second session establishment request at least includes an identifier of a first network slice;
selecting (302) a first satellite-based core network device according to at least location information of the terminal and the identifier of the first network slice;
sending (303) a first session establishment request to the first satellite-based core network device; wherein the first session establishment request is configured to request to establish a session for a terminal, and the first session establishment request at least includes the identifier of the first network slice;
wherein the first session establishment request is configured to request the selection of a satellite supporting the first network slice based on the location information of the terminal and ephemeris information, which the terminal accesses within a time period, and is configured to request to establish a session for the terminal through the selected satellite; wherein when an access duration of the terminal exceeds an access duration provided by the selected satellite, the request is configured to request reselecting a satellite supporting the first network slice that the terminal accesses within the time period, according to the location information of the terminal and the ephemeris information.

11. The method according to claim 10, wherein the method further includes:
receiving a second registration request sent by the terminal, wherein the second registration request is used to request registration for the terminal;
selecting the first satellite core network device for the terminal;
sending a first registration request to the first satellite core network device, wherein the first registration request is used to request registration for the terminal;
receiving registration-related information returned by a first access network device, wherein the registration-related information includes the identifier of the configured network slice and an identifier of a network slice available in an area where the terminal is located.

12. A communication device configured to be installed in a first satellite-based core network device, comprising:
a first receiving unit (601) used to receive a first session establishment request sent by a first access network device; wherein the first session establishment request is used to request to establish a session for a terminal, and the first session establishment request at least includes an identifier of a first network slice;
a first processing unit (602) used to select a satellite for serving the first network slice by using location information of the terminal and ephemeris information; and establish a session for the terminal through the selected satellite;
wherein the first processing unit (602) is used to select a satellite supporting the first network slice, which the terminal accesses within a time period, according to the location information of the terminal and ephemeris information; wherein when an access duration of the terminal exceeds an access duration provided by the selected satellite, the first processing unit (602) reselects a satellite supporting the first network slice that the terminal accesses within a time period, according to the location information of the terminal and ephemeris information.

13. A communication device configured to be installed in a first access network equipment, comprising:
a second receiving unit (701) used to receive a second session establishment request sent by a terminal; wherein the second session establishment request is used to request to establish a session for a terminal, and the second session establishment request at least includes an identifier of a first network slice;
a second processing unit (702) used to select a first satellite-based core network device according to at least location information of the terminal and the identifier of the first network slice; and send a first session establishment request to the first satellite-based core network device; wherein the first session establishment request is configured to request to establish a session for a terminal, and the first session establishment request at least includes the identifier of the first network slice;
wherein the first session establishment request is configured to request the selection of a satellite supporting the first network slice based on the location information of the terminal and ephemeris information, which the terminal accesses within a time period, and is configured to request to establish a session for the terminal through the selected satellite; wherein when an access duration of the terminal exceeds an access duration provided by the selected satellite, the request is configured to request reselecting a satellite supporting the first network slice that the terminal accesses within the time period, according to the location information of the terminal and the ephemeris information.

## Patentansprüche

1. Kommunikationsverfahren, das von einer ersten satellitengestützten Kernnetzwerkvorrichtung ausgeführt wird, mit den folgenden Schritten:
Empfangen (101) einer ersten Sitzungsaufbauanforderung, die von einer ersten Zugriffsnetzwerkvorrichtung gesendet wurde; wobei die erste Sitzungsaufbauanforderung dazu dient, den Aufbau einer Sitzung für ein Endgerät anzufordern, und die erste Sitzungsaufbauanforderung mindestens eine Kennung einer ersten Netzwerk-Slice enthält;
Auswählen (102) eines Satelliten zum Bedienen der ersten Netzwerk-Slice unter Verwendung von Standortinformationen des Endgeräts und Ephemerideninformationen;
Aufbauen (103) einer Sitzung für das Endgerät über den ausgewählten Satelliten;
wobei das Auswählen eines Satelliten zum Bedienen der ersten Netzwerk-Slice unter Verwendung von Standortinformationen des Endgeräts und Ephemerideninformationen umfasst:
Auswählen eines Satelliten, der die erste Netzwerk-Slice unterstützt, auf das das Endgerät innerhalb eines Zeitraums zugreift, entsprechend den Standortinformationen des Endgeräts und den Ephemerideninformationen;
wobei, wenn eine Zugriffsdauer des Endgeräts eine von dem ausgewählten Satelliten bereitgestellte Zugriffsdauer überschreitet, ein Satellit, der die erste Netzwerk-Slice unterstützt, auf das das Endgerät innerhalb des Zeitraums zugreift, entsprechend den Standortinformationen des Endgeräts und den Ephemerideninformationen erneut ausgewählt wird.

2. Verfahren nach Anspruch 1, bei dem das Auswählen eines Satelliten zum Bedienen des ersten Netzwerk-Slices umfasst:
Bestimmen einer Satelliten-Benutzer-Ebene-Funktion, UPF (user plane function), und/oder einer Satelliten-Dienstplattform, die die erste Netzwerk-Slice bedient.

3. Verfahren nach Anspruch 1, bei dem mindestens eine der folgenden Bedingungen zwischen dem Netzwerk-Slice und dem Satelliten erfüllt ist:
eine Netzwerk-Slice wird von einem einzigen Träger eines einzigen Satelliten unterstützt;
eine Netzwerk-Slice wird von einem einzigen Satelliten unterstützt;
ein Satellit unterstützt eine einzige Netzwerk-Slice;
mehrere Träger eines einzigen Satelliten unterstützen mehrere Netzwerk-Slices.

4. Verfahren nach Anspruch 3, wobei das Verfahren ferner umfasst:
Bestimmen eines Satelliten, der die erste Netzwerk-Slice unterstützt, unter Verwendung einer ersten Zuordnungsbeziehung und/oder einer zweiten Zuordnungsbeziehung; wobei die erste Zuordnungsbeziehung eine Zuordnungsbeziehung zwischen einer Netzwerk-Slice und einem Satellitenträger umfasst und die zweite Zuordnungsbeziehung eine Zuordnungsbeziehung zwischen einer Netzwerk-Slice und einem Satelliten umfasst.

5. Verfahren nach Anspruch 1, wobei das Verfahren ferner umfasst:
Synchronisieren von Benutzerinformationen des Endgeräts mit einem bodengestützten Kernnetz.

6. Verfahren nach Anspruch 5, wobei die Benutzerinformationen mindestens eines von:
Standortinformationen des Endgeräts;
Netzwerk-Slice-Abonnementsinformationen;
Informationen zum Nachverfolgungsgebiet, TA (tracking area);
Informationen zur Zugriffs- und Mobilitätsverwaltungsfunktion, AMF (access and mobility management function);
Netzwerk-Slice-Auswahlrichtlinien, NSSP (network slice selection policy)
umfassen.

7. Verfahren nach Anspruch 1, wobei das Verfahren ferner umfasst:
Empfangen einer von einer ersten Zugriffsnetzwerkvorrichtung gesendeten ersten Registrierungsanforderung, wobei die erste Registrierungsanforderung dazu dient, die Registrierung für das Endgerät anzufordern;
nach erfolgreicher Registrierung des Endgeräts, Zurücksenden von registrierungsbezogenen Informationen an die erste Zugriffsnetzwerkvorrichtung, wobei die registrierungsbezogenen Informationen eine Kennung einer konfigurierten Netzwerk-Slice und eine Kennung einer in einem Gebiet, in dem sich das Endgerät befindet, verfügbaren Netzwerk-Slice umfassen.

8. Verfahren nach einem der Ansprüche 1 bis 7, wobei das Verfahren ferner umfasst:
Übertragen von Kontextinformationen des Endgeräts an die zweite Satelliten-Kernnetzwerkvorrichtung.

9. Verfahren nach Anspruch 8, wobei das Übertragen von Kontextinformationen des Endgeräts an die zweite Satelliten-Kernnetzwerkvorrichtung umfasst:
Übertragen der Kontextinformationen des Endgeräts an die zweite Satelliten-Kernnetzwerkvorrichtung über eine Schnittstelle mit der zweiten Satelliten-Kernnetzwerkvorrichtung;
Übertragen der Kontextinformationen des Endgeräts an die zweite Satelliten-Kernnetzwerkvorrichtung über die erste Zugriffsnetzwerkvorrichtung;
Übertragen der Kontextinformationen des Endgeräts an die zweite Satelliten-Kernnetzwerkvorrichtung nacheinander über die erste Zugriffsnetzwerkvorrichtung und die zweite Zugriffsnetzwerkvorrichtung.

10. Kommunikationsverfahren, das von einer Zugriffsnetzwerkvorrichtung ausgeführt wird, umfassend:
Empfangen (301) einer von einem Endgerät gesendeten zweiten Sitzungsaufbauanforderung;
wobei die zweite Sitzungsaufbauanforderung dazu dient, den Aufbau einer Sitzung für ein Endgerät anzufordern, und die zweite Sitzungsaufbauanforderung mindestens eine Kennung einer ersten Netzwerk-Slice enthält;
Auswählen (302) einer ersten satellitengestützten Kernnetzwerkvorrichtung entsprechend zumindest Standortinformationen des Endgeräts und der Kennung der ersten Netzwerk-Slice;
Senden (303) einer ersten Sitzungsaufbauanforderung an die erste satellitengestützte Kernnetzwerkvorrichtung; wobei die erste Sitzungsaufbauanforderung konfiguriert ist, um den Aufbau einer Sitzung für ein Endgerät anzufordern, und die erste Sitzungsaufbauanforderung zumindest die Kennung der ersten Netzwerk-Slice enthält;
wobei die erste Sitzungsaufbauanforderung konfiguriert ist, um die Auswahl eines Satelliten, der die erste Netzwerk-Slice unterstützt, basierend auf den Standortinformationen des Endgeräts und Ephemerideninformationen, auf die das Endgerät innerhalb eines Zeitraums zugreift, anzufordern, und konfiguriert ist, um den Aufbau einer Sitzung für das Endgerät über den ausgewählten Satelliten anzufordern; wobei, wenn eine Zugriffsdauer des Endgeräts eine vom ausgewählten Satelliten bereitgestellte Zugriffsdauer überschreitet, die Anforderung konfiguriert ist, um die erneute Auswahl eines Satelliten anzufordern, der die erste Netzwerk-Slice unterstützt, auf die das Endgerät innerhalb des Zeitraums zugreift, entsprechend den Standortinformationen des Endgeräts und den Ephemerideninformationen.

11. Verfahren nach Anspruch 10, wobei das Verfahren ferner umfasst:
Empfangen einer vom Endgerät gesendeten zweiten Registrierungsanforderung, wobei die zweite Registrierungsanforderung verwendet wird, um eine Registrierung für das Endgerät anzufordern;
Auswählen der ersten Satelliten-Kernnetzwerkvorrichtung für das Endgerät;
Senden einer ersten Registrierungsanforderung an die erste Satelliten-Kernnetzwerkvorrichtung, wobei die erste Registrierungsanforderung verwendet wird, um eine Registrierung für das Endgerät anzufordern;
Empfangen von registrierungsbezogenen Informationen, die von einer ersten Zugriffsnetzwerkvorrichtung zurückgesendet werden, wobei die registrierungsbezogenen Informationen die Kennung der konfigurierten Netzwerk-Slice und eine Kennung einer Netzwerk-Slice umfassen, die in einem Gebiet verfügbar ist, in dem sich das Endgerät befindet.

12. Kommunikationsvorrichtung, die zur Installation in einer ersten satellitengestützten Kernnetzwerkvorrichtung konfiguriert ist, mit:
einer ersten Empfangseinheit (601), die zum Empfangen einer von einer ersten Zugriffsnetzwerkvorrichtung gesendeten ersten Sitzungsaufbauanforderung verwendet wird; wobei die erste Sitzungsaufbauanforderung dazu dient, den Aufbau einer Sitzung für ein Endgerät anzufordern, und die erste Sitzungsaufbauanforderung mindestens eine Kennung einer ersten Netzwerk-Slice enthält;
einer ersten Verarbeitungseinheit (602), die dazu dient, einen Satelliten für die Bereitstellung der ersten Netzwerk-Slice unter Verwendung von Standortinformationen des Endgeräts und Ephemerideninformationen auszuwählen; und eine Sitzung für das Endgerät über den ausgewählten Satelliten einzurichten;
wobei die erste Verarbeitungseinheit (602) dazu dient, einen Satelliten, der die erste Netzwerk-Slice unterstützt, auf die das Endgerät innerhalb eines Zeitraums zugreift, gemäß den Standortinformationen des Endgeräts und den Ephemerideninformationen auszuwählen; wobei, wenn eine Zugriffsdauer des Endgeräts eine von dem ausgewählten Satelliten bereitgestellte Zugriffsdauer überschreitet, die erste Verarbeitungseinheit (602) einen Satelliten, der die erste Netzwerk-Slice unterstützt, auf den das Endgerät innerhalb eines Zeitraums zugreift, gemäß den Standortinformationen des Endgeräts und den Ephemerideninformationen erneut auswählt.

13. Kommunikationsvorrichtung, die zur Installation in einer ersten Zugangsnetzwerkvorrichtung konfiguriert ist, mit:
einer zweiten Empfangseinheit (701), die dazu dient, eine von einem Endgerät gesendete zweite Sitzungsaufbauanforderung zu empfangen; wobei die zweite Sitzungsaufbauanforderung dazu dient, den Aufbau einer Sitzung für ein Endgerät anzufordern, und die zweite Sitzungsaufbauanforderung zumindest eine Kennung einer ersten Netzwerk-Slice enthält;
einer zweiten Verarbeitungseinheit (702), die dazu dient, eine erste satellitengestützte Kernnetzwerkvorrichtung entsprechend zumindest den Standortinformationen des Endgeräts und der Kennung der ersten Netzwerk-Slice auszuwählen; und eine erste Sitzungsaufbauanforderung an die erste satellitengestützte Kernnetzwerkvorrichtung zu senden; wobei die erste Sitzungsaufbauanforderung konfiguriert ist, um den Aufbau einer Sitzung für ein Endgerät anzufordern, und die erste Sitzungsaufbauanforderung zumindest die Kennung der ersten Netzwerk-Slice enthält;
wobei die erste Sitzungsaufbauanforderung konfiguriert ist, um die Auswahl eines Satelliten, der das erste Netzwerk-Slice unterstützt, basierend auf den Standortinformationen des Endgeräts und Ephemerideninformationen, auf die das Endgerät innerhalb eines Zeitraums zugreift, anzufordern, und konfiguriert ist, um den Aufbau einer Sitzung für das Endgerät über den ausgewählten Satelliten anzufordern; wobei, wenn eine Zugriffsdauer des Endgeräts eine vom ausgewählten Satelliten bereitgestellte Zugriffsdauer überschreitet, die Anforderung konfiguriert ist, um die erneute Auswahl eines Satelliten, der die erste Netzwerk-Slice unterstützt, auf die das Endgerät innerhalb des Zeitraums zugreift, entsprechend den Standortinformationen des Endgeräts und den Ephemerideninformationen anzufordern.

## Revendications

1. Procédé de communication effectué par un premier dispositif de réseau central basé sur un satellite, comprenant les étapes prévoyant de :
recevoir (101) une première demande d'établissement de session envoyée par un premier dispositif de réseau d'accès ; dans lequel la première demande d'établissement de session est utilisée pour demander l'établissement d'une session pour un terminal, et la première demande d'établissement de session inclut au moins un identifiant d'une première tranche de réseau ;
sélectionner (102) un satellite pour desservir la première tranche de réseau en utilisant des informations de localisation du terminal et des informations d'éphéméride ;
établir (103) une session pour le terminal via le satellite sélectionné ;
dans lequel la sélection d'un satellite pour desservir la première tranche de réseau en utilisant des informations de localisation du terminal et des informations d'éphéméride, inclut l'étape prévoyant de :
sélectionner, en fonction des informations de localisation du terminal et des informations d'éphéméride, un satellite prenant en charge la première tranche de réseau, à laquelle le terminal accède dans un laps de temps ;
resélectionner, lorsqu'une durée d'accès du terminal dépasse une durée d'accès fournie par le satellite sélectionné, un satellite prenant en charge la première tranche de réseau à laquelle le terminal accède dans la période de temps, en fonction des informations de localisation du terminal et des informations d'éphéméride.

2. Procédé selon la revendication 1, dans lequel la sélection d'un satellite pour desservir la première tranche de réseau inclut l'étape prévoyant de :
déterminer une fonction de plan d'utilisateur de satellite, UPF, et/ou une plate-forme de desserte de satellite desservant la première tranche de réseau.

3. Procédé selon la revendication 1, dans lequel au moins une des conditions suivantes est remplie entre la tranche de réseau et le satellite :
une tranche de réseau est prise en charge par une porteuse unique d'un satellite ;
une tranche de réseau est prise en charge par un satellite ;
un satellite prend en charge une tranche de réseau ;
plusieurs porteuses d'un satellite prennent en charge plusieurs tranches de réseau.

4. Procédé selon la revendication 3, dans lequel le procédé comprend en outre l'étape prévoyant de :
déterminer un satellite qui prend en charge la première tranche de réseau en utilisant une première relation de mise en correspondance et/ou une seconde relation de mise en correspondance ; dans lequel la première relation de mise en correspondance inclut une relation de mise en correspondance entre une tranche de réseau et une porteuse de satellite, et la seconde relation de mise en correspondance inclut une relation de mise en correspondance entre une tranche de réseau et un satellite.

5. Procédé selon la revendication 1, dans lequel le procédé comprend en outre l'étape prévoyant de :
synchroniser des informations d'utilisateur du terminal avec un réseau central au sol.

6. Procédé selon la revendication 5, dans lequel les informations d'utilisateur incluent au moins certaines parmi :
des informations de localisation du terminal ;
des informations de tranche de réseau souscrite ;
des informations relative à une zone de suivi, AT ;
des informations relatives à une fonction de gestion de d'accès et de mobilité, AMF ;
une politique de sélection de tranche de réseau, NSSP.

7. Procédé selon la revendication 1, dans lequel le procédé comprend en outre les étapes prévoyant de :
recevoir une première demande d'enregistrement envoyée par un premier dispositif de réseau d'accès, dans lequel la première demande d'enregistrement est utilisée pour demander l'enregistrement du terminal ;
renvoyer, après que le terminal a été enregistré avec succès, des informations relatives à l'enregistrement au premier dispositif de réseau d'accès, les informations relatives à l'enregistrement incluant un identifiant d'une tranche de réseau configurée et un identifiant d'une tranche de réseau disponible dans une zone où le terminal est situé.

8. Procédé selon l'une quelconque des revendications 1 à 7, dans lequel le procédé inclut en outre l'étape prévoyant de :
transférer des informations de contexte du terminal au second dispositif de réseau central de satellite.

9. Procédé selon la revendication 8, dans lequel le transfert d'informations de contexte du terminal au second dispositif de réseau central de satellite inclut les étapes prévoyant de :
transférer les informations de contexte du terminal au second dispositif de réseau central de satellite par l'intermédiaire d'une interface avec le second dispositif de réseau central de satellite ;
transférer les informations de contexte du terminal au second dispositif de réseau central de satellite par l'intermédiaire du premier dispositif de réseau d'accès ;
transférer les informations de contexte du terminal au second dispositif de réseau central de satellite par l'intermédiaire du premier dispositif de réseau d'accès et du second dispositif de réseau d'accès en séquence.

10. Procédé de communication effectué par un premier dispositif de réseau d'accès, comprenant les étapes prévoyant de :
recevoir (301) une seconde demande d'établissement de session envoyée par un terminal ;
dans lequel la seconde demande d'établissement de session est utilisée pour demander l'établissement d'une session pour un terminal, et la seconde demande d'établissement de session inclut au moins un identifiant d'une première tranche de réseau ;
sélectionner (302) un premier dispositif de réseau central basé sur un satellite en fonction d'au moins des informations de localisation du terminal et de l'identifiant de la première tranche de réseau ;
envoyer (303) une première demande d'établissement de session au premier dispositif de réseau central basé sur un satellite ;
dans lequel la première demande d'établissement de session est configurée pour demander d'établir une session pour un terminal, et la première demande d'établissement de session inclut au moins l'identifiant de la première tranche de réseau ;
dans lequel la première demande d'établissement de session est configurée pour demander la sélection d'un satellite prenant en charge la première tranche de réseau sur la base des informations de localisation du terminal et des informations d'éphéméride, auxquelles le terminal accède dans une période de temps, et est configurée pour demander l'établissement d'une session pour le terminal par l'intermédiaire du satellite sélectionné ;
lorsqu'une durée d'accès du terminal dépasse une durée d'accès fournie par le satellite sélectionné, la demande est configurée pour resélectionner un satellite prenant en charge la première tranche de réseau à laquelle le terminal accède dans la période de temps, en fonction des informations de localisation du terminal et des informations d'éphéméride.

11. Procédé selon la revendication 10, dans lequel le procédé comprend en outre les étapes prévoyant de :
recevoir une seconde demande d'enregistrement envoyée par le terminal, dans lequel la seconde demande d'enregistrement est utilisée pour demander l'enregistrement du terminal ;
sélectionner le premier dispositif de réseau central de satellite pour le terminal ;
envoyer une première demande d'enregistrement au premier dispositif de réseau central de satellite, dans lequel la première demande d'enregistrement est utilisée pour demander l'enregistrement pour le terminal ;
recevoir des informations relatives à l'enregistrement renvoyées par un premier dispositif de réseau d'accès, les informations relatives à l'enregistrement incluant l'identifiant de la tranche de réseau configurée et un identifiant d'une tranche de réseau disponible dans une zone où le terminal est situé.

12. Dispositif de communication configuré pour être installé dans un premier dispositif de réseau central basé sur un satellite, comprenant :
une première unité de réception (601) utilisée pour recevoir une première demande d'établissement de session envoyée par un premier dispositif de réseau d'accès ;
dans lequel la première demande d'établissement de session est utilisée pour demander l'établissement d'une session pour un terminal, et la première demande d'établissement de session inclut au moins un identifiant d'une première tranche de réseau ;
une première unité de traitement (602) utilisée pour sélectionner un satellite pour desservir la première tranche de réseau en utilisant des informations de localisation du terminal et des informations d'éphéméride ; et
établir une session pour le terminal via le satellite sélectionné ;
dans lequel la première unité de traitement (602) est utilisée pour sélectionner un satellite prenant en charge la première tranche de réseau, à laquelle le terminal accède dans une période de temps, en fonction des informations de localisation du terminal et des informations d'éphéméride ; dans lequel lorsqu'une durée d'accès du terminal dépasse une durée d'accès fournie par le satellite sélectionné, la première unité de traitement (602) resélectionne un satellite prenant en charge la première tranche de réseau à laquelle le terminal accède dans une période de temps, en fonction des informations de localisation du terminal et des informations d'éphéméride.

13. Dispositif de communication configuré pour être installé dans un premier équipement de réseau d'accès, comprenant :
une seconde unité de réception (701) utilisée pour recevoir une seconde demande d'établissement de session envoyée par un terminal ;
dans lequel la seconde demande d'établissement de session est utilisée pour demander l'établissement d'une session pour un terminal, et la seconde demande d'établissement de session inclut au moins un identifiant d'une première tranche de réseau ;
une seconde unité de traitement (702) utilisée pour sélectionner un premier dispositif de réseau central basé sur un satellite en fonction d'au moins des informations de localisation du terminal et de l'identifiant de la première tranche de réseau ; et
pour envoyer une première demande d'établissement de session au premier dispositif de réseau central par satellite ;
dans lequel la première demande d'établissement de session est configurée pour demander d'établir une session pour un terminal, et la première demande d'établissement de session inclut au moins l'identifiant de la première tranche de réseau ;
dans lequel la première demande d'établissement de session est configurée pour demander la sélection d'un satellite prenant en charge la première tranche de réseau sur la base des informations de localisation du terminal et des informations d'éphéméride, auxquelles le terminal accède dans une période de temps, et est configurée pour demander l'établissement d'une session pour le terminal par l'intermédiaire du satellite sélectionné ;
lorsqu'une durée d'accès du terminal dépasse une durée d'accès fournie par le satellite sélectionné, la demande est configurée pour resélectionner un satellite prenant en charge la première tranche de réseau à laquelle le terminal accède dans la période de temps, en fonction des informations de localisation du terminal et des informations d'éphéméride.
